# DEMANDE DE BREVET EUROPEEN

(11) **EP 4 016 112 A2**
(43) Date de publication de la demande: **22.06.2022**
(21) Numéro de dépôt: 21215707.7
(22) Date de dépôt: 17.12.2021
(51) Int. Cl.: G01S 5/16, G01S 19/48, A01B 79/00

(54) **PROCÉDÉ DE SUIVI DE CULTURES AGRICOLES**

(30) Priorité: 19.12.2020 FR 2013763
(71) Demandeur: 3D Aerospace SASU, 81000 Albi (FR)
(72) Inventeur: Kawak, Benjamin, 31460 Toutens (FR)
(74) Mandataire: Kieffer, Valentin

(57) **Abrégé**

La présente invention concerne un procédé de suivi de cultures agricoles (C) au moyen d'un outil de géolocalisation. L'outil de géolocalisation comprend un boîtier (1) avec un système de vision (2), un récepteur GNSS (3), un système de transmission de données et un processeur (7), le système de vision (2) comprenant une première caméra (21) disposée sur une face avant (11) du boîtier (1). Le boîtier (1) est déplacé sur une surface de culture agricole, le système de vision (2) acquiert au moins une image des cultures agricoles (C), des cibles sont reconnues dans cette image et sont géolocalisées avec les coordonnées de géolocalisation issues du récepteur GNSS (3).

## Description

La présente invention concerne un procédé de suivi de cultures agricoles au moyen d'un outil de géolocalisation combinant un récepteur GNSS avec une ou plusieurs caméras.

D'une part, l'utilisation de récepteurs GNSS dans tout type de véhicules aériens, maritimes ou terrestres à des fins de géolocalisation et de navigation est bien connue dans l'état de la technique. De nombreux véhicules modernes intègrent un système de réception GNSS relié à un dispositif de navigation offrant différents niveaux d'assistance à la conduite : simple géolocalisation sur une carte, guidage par calcul d'itinéraires, voire même pilotage complet et autonome du véhicule. D'autre part, l'usage de caméras embarquées dans ou sur des véhicules est lui aussi bien connu dans l'état de la technique, comme le montre par exemple la publication CN103241172A. Ces caméras peuvent être dirigées vers l'arrière du véhicule ou dans les angles morts et offrent une meilleure visibilité au conducteur lorsque les images filmées sont retransmises sur un écran situé dans l'habitacle. Elles peuvent aussi être utilisées pour enregistrer les mouvements du véhicule et son environnement et ainsi fournir des preuves sur le déroulé des faits en cas d'accident.

L'objectif principal de la présente invention est de fournir un procédé de suivi de cultures agricoles au moyen d'un outil compact de proxi-détection à disposer sur un véhicule terrestre permettant de reconnaître et de localiser précisément des objets ou des anomalies dans l'environnement du véhicule. En particulier, l'objectif de la présente invention est de fournir un procédé et un outil destiné aux exploitations agricoles permettant de fournir des preuves visuelles géolocalisées sur la présence d'anomalies agricoles ainsi que des indications sur la santé et le rendement de l'exploitation agricole.

Cet objectif est atteint par le procédé de suivi de cultures selon la revendication 1 et par l'outil de géolocalisation selon la revendication 10, qui est conçu pour la mise en œuvre de ce procédé. D'autres caractéristiques et modes de réalisation avantageux de l'invention font l'objet de revendications dépendantes.

Les caractéristiques techniques du procédé selon l'invention ainsi que de l'outil de géolocalisation sont décrites en détail dans ce qui suit en prenant appui sur les dessins et selon divers modes de réalisation avantageux.

Les dessins montrent :
- Figure 1: Usage de l'outil de géolocalisation dans une exploitation agricole
- Figures 2a: Boîtier disposé sur le capot d'un véhicule terrestre
- Figures 2b: Boîtier disposé sur le toit d'un véhicule terrestre
- Figures 3a-c: Vues en perspective du boîtier
- Figure 4: Vue éclatée du boîtier avec un système de pivot et un système de fixation

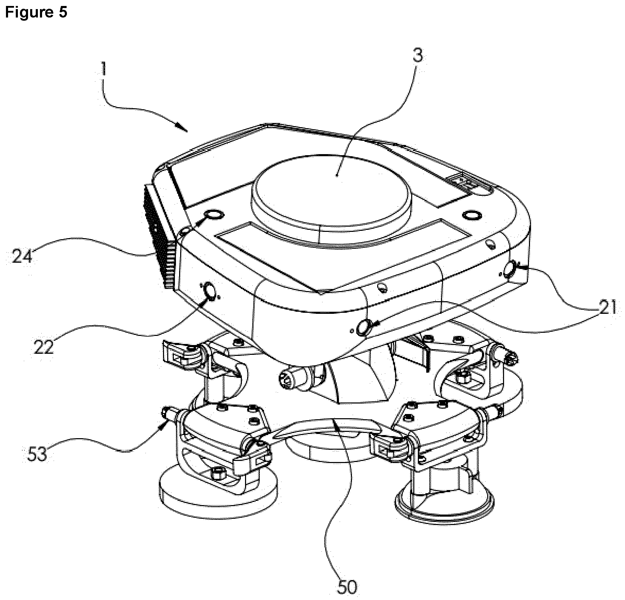

- Figure 5: Vue en perspective du boîtier avec un système de pivot et un système de fixation
- Figures 6-7: Vues latérales d'un système de pivot et de fixation selon des modes de réalisation du boîtier

Les dessins n'ont qu'une valeur illustrative et représentent des modes de réalisations possibles de l'invention.

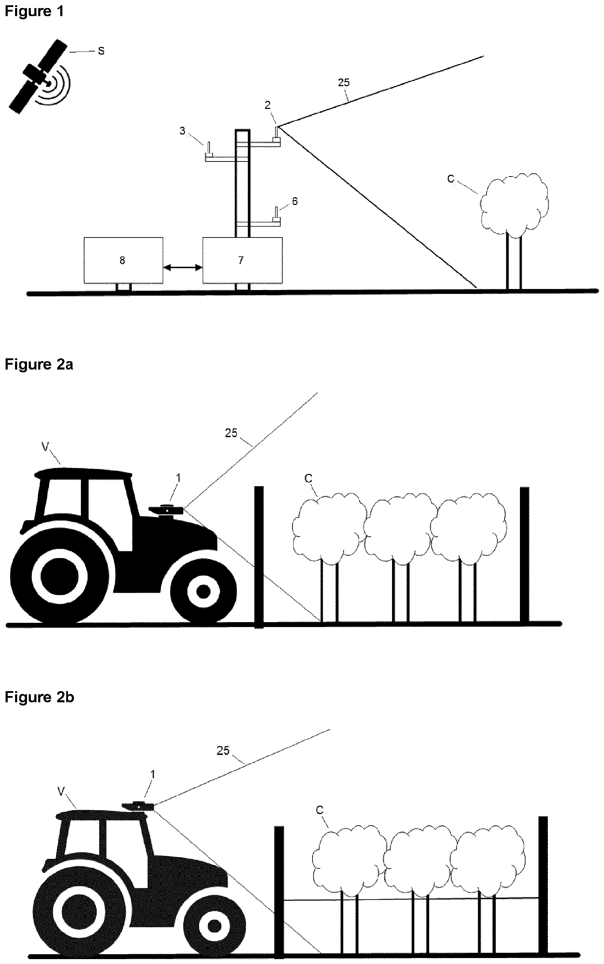

Le cœur de l'invention est un procédé de suivi de cultures agricoles C permettant de reconnaître et de localiser précisément des cibles dans les plantations. Ces cibles peuvent être un objet tel qu'un plant, un fruit, un épi, une grappe de raisins, un tuteur pour une plantation ou une anomalie telle qu'un feuillage décoloré ou asséché, un fruit desséché ou pourri, un plant manquant ou mort, un ravage causé aux cultures agricoles par des nuisibles ou un dégât météorologique causé aux cultures (grêle, gel, vent etc.). Les objets ou anomalies à cibler sont définis par l'utilisateur et sont ensuite identifiés et localisés par un outil de géolocalisation qui parcourt une surface de culture agricole à leur recherche (Figure 1). Cet outil comprend un boîtier 1 adapté à la proxi-détection de cibles, c'est-à-dire à la détection de cibles situées à proximité du boîtier 1. Pour cela, le boîtier 1 comprend un système de vision 2, un récepteur GNSS 3, un système de transmission de données et un processeur 7. Les cibles prédéfinies sont reconnues et localisées par l'agrégation ou fusion de deux types de données : des données de géolocalisation issues du récepteur GNSS 3 d'une part et des données visuelles issues du système de vision 2 d'autre part. Les données de géolocalisation issues du récepteur GNSS 3 fournissent une position absolue de l'outil sur le globe terrestre avec une précision décimétrique. Les données visuelles issues du système de vision 2 permettent de reconnaître et de mesurer la position relative des cibles par rapport à l'outil avec une grande précision de l'ordre de 30 cm. De l'agrégation de ces deux types de données résulte une reconnaissance et localisation précise de cibles dans l'environnement de l'outil. Disposé sur un véhicule terrestre V en déplacement dans une plantation agricole (Figures 2a-b), l'outil peut être utilisé à des fins de cartographie et d'analyses de données sur ces cultures agricoles C.

Dans le procédé selon l'invention, le boîtier 1 de l'outil de géolocalisation est déplacé par un véhicule terrestre V sur une surface de culture agricole et le système de vision 2 acquiert au moins une image des cultures agricoles. Dans cette image, un algorithme d'analyse d'image reconnaît au moins une cible prédéfinie puis les coordonnées de géolocalisation de cette cible sont calculées à partir des coordonnées de géolocalisation du boîtier 1 et de la position relative de la cible par rapport au boîtier 1. Les coordonnées de géolocalisation du boîtier 1 sont calculées à partir de signaux GNSS acquis par le récepteur GNSS 3 et la position relative de la cible par rapport au boîtier 1 est déterminée à partir de données visuelles issues du système de vision 2. Une entrée est créée dans une base de données, associant la nature de la cible reconnue ainsi que les coordonnées de géolocalisation de la cible.

L'invention se montre particulièrement prometteuse pour une utilisation dans l'agriculture de précision et a été testée avec succès dans des exploitations viticoles. Disposé sur un véhicule terrestre V tel un tracteur qui circule parmi les rangs de vigne, le boîtier 1 permet de détecter et géolocaliser des informations sur deux sujets de première importance pour les viticulteurs : d'éventuelles anomalies affectant leurs vignes d'une part et le développement des grappes et raisins d'autre part. En ce qui concerne les anomalies, l'invention permet par exemple d'automatiser la recherche et la quantification de plants morts ou manquants. Le remplacement de tout plant mort ou manquant est essentiel pour maintenir un niveau de production optimal de la parcelle. L'invention permet par ailleurs d'identifier et de suivre l'évolution et la propagation de maladies dans une parcelle, les maladies se matérialisant par des altérations visibles sur les feuilles ou sur les grappes. L'identification de maladies telles que le mildiou, les maladies du bois, la flavescence dorée ou les carences et la cartographie des pieds atteints sur une parcelle permet d'agir dès l'apparition des premiers symptômes et de cibler la zone d'action dans laquelle utiliser les remèdes adaptés. L'usage ciblé et calibré de pesticides ou d'engrais au bon moment et uniquement dans les zones requises permet de réduire leur consommation à l'échelle de l'exploitation. En ce qui concerne le développement des grappes de raisins, l'invention permet le comptage individuel de chaque grappe de raisin voire grain de raisin individuel visible ainsi qu'une estimation de son volume, et ce sur l'ensemble d'une parcelle ou d'une exploitation. De ce décompte résulte une estimation parfaitement fiable et précise du volume de récolte auquel peut s'attendre le vigneron et du rendement par plant ou par unité de surface. La qualité de cette estimation dépasse de loin celle des estimations actuelles basées sur l'observation d'échantillons isolés et l'extrapolation des observations à l'ensemble de la parcelle ou de l'exploitation. Par ailleurs, en mesurant le volume des grappes ou d'autres caractéristiques comme l'aspect ou la couleur des grains, l'invention permet de suivre l'évolution de la maturité du raisin. Tout ceci permet d'anticiper la date optimale et le volume de récolte attendu et ainsi une gestion efficace des ressources nécessaires (main d'œuvre saisonnière etc.). Une fois déployé sur un véhicule terrestre V, l'outil permet notamment de collecter des données visuelles géolocalisées et datées de l'exploitation viticole. Ces images sont segmentées afin de qualifier et de quantifier les caractéristiques utiles pour l'utilisateur. Ces caractéristiques peuvent être mises à disposition via une cartographie détaillée de l'exploitation viticole. À chaque passage de l'outil, une carte différentielle peut être établie afin de qualifier et de quantifier le(s) changement(s) observé(s) sur une surface de culture agricole. En résumé, la collecte systématique et l'analyse rigoureuse de données sur les cultures constitue une source d'information précieuse pour les agriculteurs. Ces informations permettent de surveiller leurs plantations, d'anticiper leur évolution et de mettre en oeuvre les actions nécessaires au bon moment pour le succès de la culture. Même si les possibilités d'utilisation de l'invention sont ici majoritairement décrites en prenant pour exemple une exploitation viticole, celle-ci est tout-à-fait adaptée à une application dans d'autres domaines de l'agriculture, par exemple dans les cultures fruitières, légumières, céréalières et le maraîchage.

Dans un mode de réalisation possible de l'invention, lorsque l'algorithme d'analyse d'image reconnaît une cible, il calcule aussi un indice de confiance de la reconnaissance. Plus cet indice est élevé, plus la certitude d'avoir correctement identifié la nature de la cible est grande. Cet indice de confiance est associé à la cible dans la base de données et peut servir de critère dans une étape ultérieure du procédé pour exclure des cibles dont l'indice de confiance est inférieur à un certain seuil de confiance, c'est-à-dire qu'il existe un risque trop élevé de reconnaissance erronée de ces cibles. Un indice de confiance faible peut être le signe d'une cible qui a été identifiée à tort alors qu'elle n'existe pas en réalité, ou d'une cible qui existe effectivement, mais dont la nature a été mal déterminée, par exemple une feuille de couleur anormale confondue avec une grappe de raisin. Pour les identifications plus complexes, par exemple pour attribuer une anomalie du feuillage à une certaine maladie, l'algorithme d'analyse d'image peut aussi fournir tout ou partie de l'image en question à l'utilisateur pour validation. Une validation ou invalidation par l'utilisateur est une source précieuse d'information fiable pour l'algorithme d'analyse d'image et peut avoir deux conséquences : d'une part, l'indice de confiance de la reconnaissance peut être grandement augmenté en cas de validation et diminué en cas d'invalidation par l'utilisateur. D'autre part, lorsque l'algorithme d'analyse d'image utilise une intelligence artificielle entraînée à reconnaître les cibles, l'information donnée par l'utilisateur peut être associée à l'image en question, et cette image entrée dans le jeu de données servant à l'entraînement de l'intelligence artificielle pour améliorer les performances de l'algorithme d'analyse d'image par apprentissage automatique (machine learning). Dans un mode de réalisation de l'invention, il est particulièrement avantageux que toutes les cibles reconnues soient entrées dans la base de données, même si l'indice de confiance correspondant est trop faible pour que la reconnaissance soit crédible. En effet, une même cible est fréquemment détectée et reconnue plusieurs fois par l'outil de géolocalisation à divers moments. Par exemple, une même grappe de raisin peut être visible des deux côtés d'un rang de vignes, elle sera donc détectée et reconnue deux fois par l'outil de géolocalisation lorsque le boîtier (1) est déplacé d'abord dans l'inter-rang situé d'un côté du rang où se trouve la grappe, puis dans l'inter-rang situé de l'autre côté. Dans un autre exemple, une même grappe de raisin peut être détectée et reconnue deux fois par l'outil de géolocalisation lorsque le boîtier (1) est déplacé une première fois selon un certain trajet, puis une deuxième fois selon le même trajet quelques temps plus tard, par exemple si le boîtier (1) sillonne régulièrement une surface de culture agricole dans le cadre de contrôles périodiques. Ainsi, du printemps aux vendanges, une même grappe peut avoir été détectée et reconnue plusieurs fois de manière indépendante, ce qui fournira une estimation hautement fiable du nombre de grappes et donc du volume de récolte juste avant les vendanges. Dans tous les cas, lorsqu'une même cible est détectée et reconnue deux fois, l'outil de géolocalisation remarque qu'il a à faire à une seule et même cible et non à deux cibles distinctes en comparant la nature des cibles reconnues ainsi que leur géolocalisation. Si deux cibles sont reconnues comme étant de même nature et se trouvent au même endroit, il s'agit bien d'une seule et même cible reconnue deux fois. Deux cibles sont considérées comme se trouvant au même endroit lorsque leurs coordonnées de géolocalisation sont identiques ou lorsque leur distance, en particulier la distance entre leurs centres géométriques respectifs, est inférieure à un certain seuil de distance. Ce seuil de distance est adapté à la taille de la cible en question. Lorsqu'une même cible est détectée et reconnue plusieurs fois par l'outil de géolocalisation de manière indépendante, l'incertitude sur l'existence et sur la nature de cette cible diminuent. Ainsi, il se peut qu'une cible initialement entrée dans la base de données avec un indice de confiance trop faible pour être crédible voie son indice de confiance augmenter par l'accumulation de détection et de reconnaissances concordantes, pour finalement dépasser le seuil de confiance correspondant à une reconnaissance crédible. Similairement, une cible entrée dans la base de données peut voir son indice de confiance diminuer si plusieurs observations ultérieures invalident la première observation. Ce procédé est particulièrement avantageux car plutôt que de s'efforcer à avoir une détection et une reconnaissance parfaitement fiables avec un haut taux de confiance dès la première observation, ce qui est à la fois gourmand en temps d'acquisition d'images (si une meilleure qualité d'image est requise) et en ressources informatiques (si un algorithme d'analyse d'image plus complexe est requis), on peut s'appuyer sur plusieurs observations indépendantes mais redondantes de la même cible qui se consolident ou s'infirment les unes les autres. Ceci permet une reconnaissance plus rapide et plus efficace, dont l'indice de confiance augmente au fil du temps, sans pour autant nécessiter d'action particulière pour obtenir des observations redondantes. Le procédé de suivi de cultures agricoles (C) selon l'invention produit des observations redondantes des mêmes cibles par nature, par exemple lorsqu'une surface agricole est sillonnée et qu'une cible est visible sur différentes images acquises selon différentes positions, ou par exemple lorsqu'un contrôle périodique est effectué au même endroit pour suivre l'évolution d'une culture au fil de l'année.

Optionnellement, lorsque le véhicule terrestre V accompagné du boîtier 1 effectue deux passages espacés dans le temps sur la même surface de culture agricole, une information extraite lors du second passage est comparée informatiquement avec une information extraite lors du premier passage. Une carte géographique de la surface agricole peut alors être générée, sur laquelle le changement constaté entre les deux informations extraites est représenté aux coordonnées de géolocalisation de chaque cible suivant un processus de cartographie différentielle. L'information extraite lors des passages peut être une ou plusieurs caractéristiques d'une ou plusieurs cibles telles que la taille ou le volume d'un fruit ou d'une grappe de raisins ou le nombre de grains de raisins d'une grappe de raisins ainsi que leur diamètre ou la couleur d'un fruit ou d'une grappe de raisin ou d'un grain de raisin ou d'un feuillage ou le nom d'une maladie correspondant à une anomalie d'un feuillage ou d'un fruit ou d'une grappe de raisins ou d'un grain de raisin.

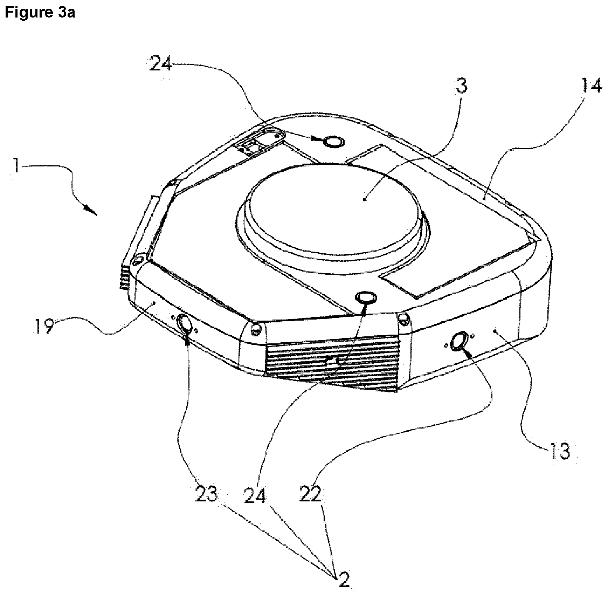

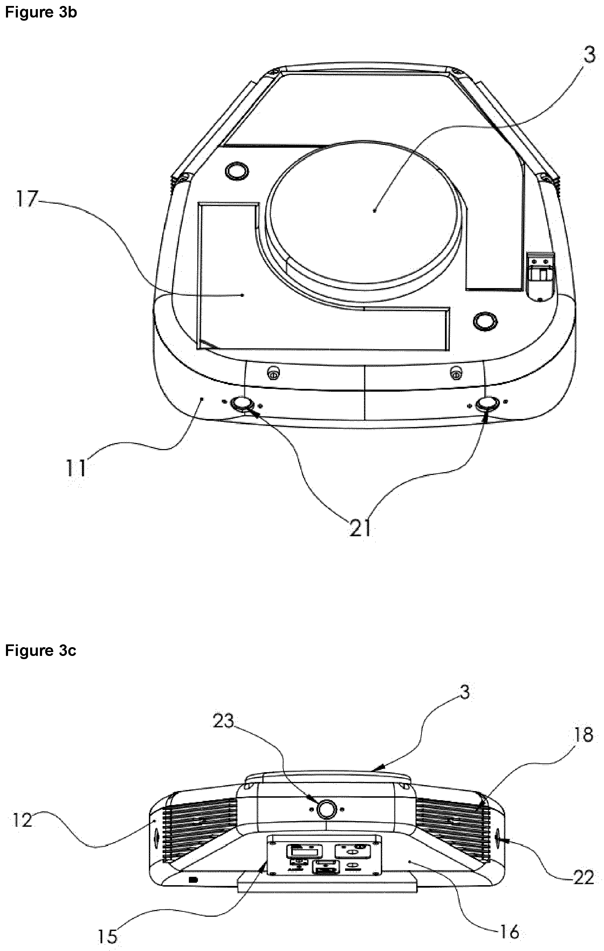

Le procédé selon l'invention est mis en oeuvre par un outil de géolocalisation comprenant un boîtier 1 avec un système de vision 2, un récepteur GNSS 3, un système de transmission de données et un processeur 7 (Figures 3a-c). Le système de vision 2 comprend au moins une première caméra 21 disposée sur une face avant 11 du boîtier 1. Le récepteur GNSS 3 est un récepteur de type connu, préférablement multifréquences et multi-constellations, permettant la géolocalisation par un système de satellites S et est disposé sur une face supérieure 14 du boîtier 1. Le système de transmission de données permet la communication entre l'outil selon l'invention et un serveur distant 8 et/ou entre l'outil selon l'invention et d'autres outils selon l'invention. Cette communication peut être unidirectionnelle (exclusivement envoi ou réception de données par l'outil) ou bidirectionnelle (envoi et réception de données par l'outil), sans fil ou filaire. Le processeur 7 permet de piloter les différents composants du boîtier 1, de traiter des données et d'effectuer des calculs.

Dans un mode de réalisation du boîtier 1 comportant une unique caméra 21, la position relative d'une cible par rapport au boîtier 1 est déterminée par l'agrégation de deux images successives prises par la caméra 21 d'une même cible selon des angles de vue différents, ce qui fournit une vision en relief (tridimensionnelle) par stéréoscopie. Lorsque le boîtier 1 est déplacé par le véhicule terrestre V au sein des cultures agricoles C, deux images prises par la caméra 21 à un certain intervalle de temps, par exemple à une seconde d'intervalle, peuvent être agrégées pour fournir une vision en relief (tridimensionnelle) par stéréoscopie. Cet intervalle de temps est à adapter en fonction de la vitesse de déplacement du véhicule terrestre V. Il est par ailleurs important de savoir quelle distance la caméra 21 a parcouru entre les deux prises d'image. Cette distance peut être déterminée par exemple grâce à une centrale inertielle, par odométrie visuelle ou par comparaison des deux positions de géolocalisation issues du récepteur GNSS 3.

Dans un mode de réalisation avantageux du boîtier 1, une première et une deuxième caméra 21 sont disposées sur la face avant du boîtier 1. À l'image des yeux humains, la première et la deuxième caméra 21 procurent chacune des images bidimensionnelles qui sont agrégées afin d'obtenir une vision en relief (tridimensionnelle) par stéréoscopie. Les cibles à visualiser en relief doivent se trouver dans la zone de recoupement des champs de vision 25 de la première et de la deuxième caméra 21, un large recoupement des champs de vision 25 de ces deux caméras 21 est donc avantageux pour obtenir un large champ de vision 25 en relief. Selon le mode de réalisation préféré du boîtier, la première et la deuxième caméra 21 sont disposés selon deux directions sensiblement parallèles, espacées d'environ 150 mm et disposent chacune d'un champ de vision 25 de 90°, permettant une vision en relief dans un large champ 25 situé au-devant de l'outil. D'autres dispositions et champs de vision 25 sont possibles dans la mesure où un recoupement minimal des champs de vision 25 de la première et de la deuxième caméra 21 est préservé. Par exemple, les deux caméras 21 peuvent être disposées selon deux directions légèrement divergentes, ce qui améliore la vision latérale de chacune des caméras 21. Au contraire, elles peuvent être disposées selon deux directions convergentes, ce qui agrandit la zone de recoupement de leurs champs de vision 25 et donc le champ de vision en relief.

La vision en relief de l'environnement situé au-devant de la première et de la deuxième caméra 21 est importante par plusieurs aspects. Premièrement, elle permet de mesurer en trois dimensions la position relative d'une cible donnée par rapport au boîtier 1. La position absolue du boîtier étant connue grâce aux données de géolocalisation issues du récepteur GNSS 3, la position absolue de la cible pourra être déterminée à son tour avec précision. L'information de position relative du boîtier par rapport à une cible peut aussi être utilisée pour déterminer la position du boîtier et/ou son mouvement de manière plus précise qu'à partir des données de géolocalisation issues du récepteur GNSS 3. La position absolue du boîtier 1 peut être déterminée à partir de sa position relative par rapport à une cible environnante dont la position absolue est connue. Le mouvement du boîtier 1 (en translation et/ou rotation), sa vitesse et son accélération peuvent être déterminés par l'outil de manière autonome par comparaison de plusieurs positions relatives successives du boîtier 1 par rapport à une même cible fixe espacées d'un temps donné. Deuxièmement, la vision en relief de l'environnement du boîtier 1 peut être exploitée pour une meilleure reconnaissance de cibles environnantes et pour une meilleure appréciation de leurs caractéristiques (dimension, couleur etc.). Troisièmement, la redondance de l'information captée deux fois par les caméras dans leur champ de vision 25 commun peut être utilisée pour améliorer la fiabilité de la reconnaissance de cibles et donc de l'indice de confiance associé. Quatrièmement, les données tridimensionnelles ainsi acquises ouvrent la possibilité de construire des modèles 3D d'une surface agricole.

Dans le contexte d'utilisation envisagé pour le boîtier 1, ce dernier est disposé sur un véhicule terrestre V dont le sens de déplacement correspond soit à la direction dans laquelle pointent la première et la deuxième caméra 21, soit à une direction sensiblement orthogonale. Dans le deuxième cas, la première et la deuxième caméra 21 font directement face aux cultures lorsque le véhicule terrestre V se déplace dans un inter-rang. Elles sont donc parfaitement orientées pour fournir des images des fruits, du feuillage ou d'autres caractéristiques des plants qui défilent devant leur objectif, et qu'un traitement de données permettra de reconnaître, de mesurer, de géolocaliser et de cartographier. Selon le mode de réalisation préféré du boîtier 1, ces caméras 21 disposent alors d'un champ de vision 25 grand angle entre 150° et 200°, préférablement entre 160° et 190°, plus préférablement d'environ 180°, ce qui leur permet d'acquérir des images de tout objet se trouvant sur le côté du véhicule, quel que soit sa hauteur relative par rapport aux caméras 21.

La géolocalisation de l'outil par le récepteur GNSS 3 est effectuée par calcul de la distance entre le récepteur GNSS 3 et plusieurs satellites S en orbite terrestre dont les positions exactes sont connues. Ces distances sont dérivées du temps de parcours d'un signal entre les satellites S et le récepteur GNSS 3 et supposent un parcours rectiligne du signal. Or, lorsqu'un obstacle est interposé entre le récepteur GNSS 3 et un satellite S donné, le récepteur GNSS 3 réceptionne non pas un signal au parcours rectiligne, mais un signal ayant subi une ou plusieurs réflexions. Un signal réfléchi parcourt plus de distance et met plus de temps à atteindre le récepteur GNSS 3 qu'un signal au parcours rectiligne. Un signal réfléchi, s'il était considéré pour géolocaliser l'outil, conduirait donc à une surestimation de la distance entre l'outil et le satellite S en question et fausserait le calcul de géolocalisation. Pour ces raisons, il est particulièrement avantageux de considérer pour le calcul de géolocalisation uniquement des signaux GNSS issus de satellites S sur lesquels l'outil a une vue directe, et d'exclure les autres signaux GNSS. Pour cela, le système de vision 2 dispose d'au moins une caméra supérieure 24 disposée sur une face supérieure 14 du boîtier 1. Cette caméra supérieure 24 a préférablement un large champ de vision de 180° et est utilisée pour détecter un obstacle surplombant le boîtier 1 ou un obstacle environnant de hauteur supérieure au boîtier 1 et cachant une partie du ciel à la vue directe du récepteur GNSS 3. La détection d'un tel obstacle permet de classifier le ciel en deux régions : une première région du ciel sur laquelle le récepteur GNSS a une vue directe et dégagée et une seconde région du ciel obstruée à la vue directe du récepteur GNSS 3. En présence de multiples obstacles, par exemple dans un milieu au relief marqué, à proximité de végétaux ou de bâtiments de grande hauteur, ces deux régions peuvent être discontinues et il ne peut exister que quelques « fenêtres » en direction desquelles le récepteur GNSS 3 a une vue dégagée sur le ciel. Tout signal GNSS émis par un satellite S et reçu par le récepteur GNSS 3 contenant les coordonnées de position dudit satellite, il est possible de déterminer pour chaque signal reçu s'il émane d'un satellite S ayant une vue dégagée sur le récepteur GNSS 3, auquel cas le signal peut être pris en compte dans le calcul de géolocalisation, ou non, auquel cas le signal peut être exclu du calcul de géolocalisation. Selon un mode de réalisation avantageux de l'invention, le récepteur GNSS 3 dépasse de la face supérieure 14 du boîtier afin qu'aucun composant de l'outil n'obstrue sa vue du ciel. Ceci implique toutefois que le récepteur GNSS 3 obstrue une portion non négligeable du ciel à la vue de la caméra supérieure 24. Pour remédier à cela, il peut être prévu deux caméras supérieures 24 ou plus disposées sensiblement de part et d'autre du récepteur GNSS 3 sur la face supérieure 14 du boîtier.

Selon un mode de réalisation avantageux de l'invention, le système de vision 2 comporte cinq caméras permettant d'acquérir des données visuelles de l'environnement sous forme d'image et/ou de vidéo. Deux caméras frontales 21 sont disposées sur une face avant 11 du boîtier 1, deux caméras latérales 22 sont disposées chacune sur une face latérale 12, 13 du boîtier 1 et une caméra supérieure 24 est disposée sur une face supérieure 14 du boîtier 1. La première et la deuxième caméra 21 évoquées dans les paragraphes précédents peuvent faire office de caméras frontales 21 et offrent une vision en relief (tridimensionnelle) par stéréoscopie comme décrit ci-avant. Dans ce mode de réalisation, les caméras frontales 21 et latérales 22 permettent la reconnaissance et le positionnement de cibles se trouvant au-devant et sur les côtés du véhicule terrestre V comme les rangs parcellaires, les plantations agricoles, l'infrastructure agricole et d'autres objets se trouvant sur le même chemin ou d'obstacles vers lesquels le véhicule terrestre V se dirige. Les caméras frontales 21 et latérales 22 sont aussi bien adaptées à l'identification des limites de la trajectoire à emprunter par le véhicule et de la zone de passage à respecter (inter-rangs, zone parcellaire, système de treillis, végétaux et autres objets sur les à-côtés). Les deux caméras latérales 22 sont orientées dans un plan sensiblement orthogonal à la direction avant dans laquelle pointent les deux caméras frontales 21. Elles procurent une vision des objets se trouvant sur les côtés de l'outil et auprès desquels passe le véhicule sur lequel il est disposé. Elles sont donc particulièrement adaptées aux missions de reconnaissance, de mesure et de cartographie de cibles se trouvant de part et d'autre de la trajectoire empruntée par l'outil. Par exemple, pour une utilisation de l'outil sur un véhicule se déplaçant entre deux rangs d'une culture agricole (telle que vignes, arbres fruitiers etc.), les caméras latérales 22 sont parfaitement orientées pour fournir des images des fruits, du feuillage ou d'autres caractéristiques des plants qui défilent devant leur objectif, et qu'un traitement de données permettra de reconnaître, de mesurer, de géolocaliser et de cartographier. Selon le mode de réalisation préféré de l'invention, les caméras latérales 22 disposent d'un champ de vision 25 grand angle entre 150° et 200°, préférablement entre 160° et 190°, plus préférablement d'environ 180°, ce qui leur permet d'acquérir des images de tout objet se trouvant sur le côté de l'outil, quel que soit sa hauteur relative par rapport aux caméras latérales 22. La détermination de la position relative d'une cible se trouvant dans le champ de vision d'une caméra latérale 22 par rapport au boîtier peut être réalisée à l'aide d'images fournies par une seule caméra latérale 22 prises selon des angles de vue différents, et qui peuvent être agrégées pour fournir une vision en relief (tridimensionnelle) par stéréoscopie, comme déjà décrit ci-haut au sujet du mode de réalisation du boîtier 1 comportant une unique caméra 21.

Selon un mode de réalisation avantageux de l'invention, le système de vision 2 comporte en outre une caméra arrière 23 disposée sur la face arrière 19 du boîtier 1. Cette caméra arrière 23 complète le panorama formé par les caméras frontales 21 et latérales 22 et permet à l'outil de jouir d'une vision à 360° de son environnement. Elle peut fournir des images prises selon un angle très différent des autres caméras. Les cultures peuvent ainsi être observées sous différents angles, ce qui peut être avantageux pour identifier des cibles difficilement visibles derrière des feuilles ou des branchages. Dans un mode de réalisation possible de l'invention, au moins deux images sont fournies par le système de vision 2 des mêmes plantations, prises avec des caméras (frontales et/ou latérales et/ou arrière) et des angles différents. L'algorithme d'analyse d'images examine ces plusieurs images pour être sûr de ne pas avoir manqué de cible.

Selon un mode de réalisation avantageux de l'invention, l'outil comporte en plus du boîtier 1 un système de fixation 5 permettant de fixer le boîtier 1 sur un véhicule. Optionnellement, l'outil comporte en outre un pivot 4 à disposer entre le boîtier 1 et le système de fixation 5 permettant d'ajuster l'inclinaison du boîtier 1 pour diriger le champ de vision 25 des caméras.

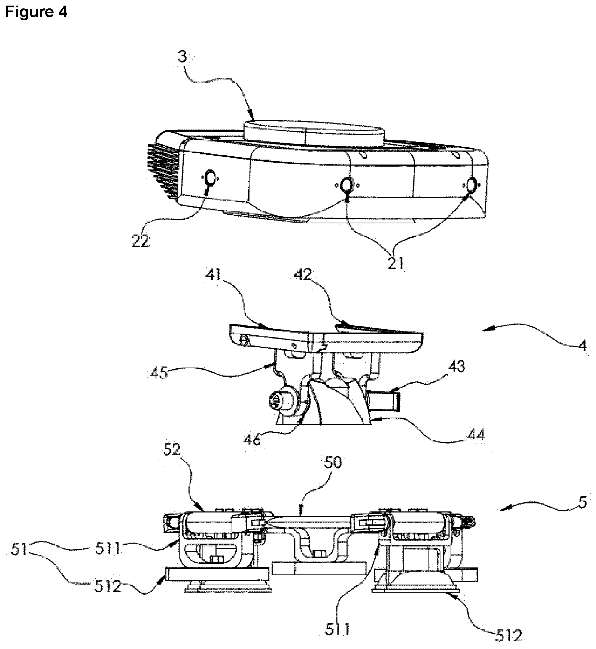

Le pivot 4 permet d'ajuster l'inclinaison du boîtier 1 par rotation autour d'un axe sensiblement orthogonal au plan médiateur des deux caméras frontales 21, c'est-à-dire un axe horizontal et perpendiculaire à la direction avant dans laquelle pointent les deux caméras frontales 21. Le pivot 4 permet de pivoter le boîtier 1 d'avant en arrière et d'ajuster l'angle avec lequel les caméras frontales 21 pointent en direction du sol. Cet ajustement peut s'avérer nécessaire selon l'inclinaison de la partie du véhicule (par exemple toit, capot) sur laquelle est fixé l'outil afin de garantir que les deux caméras frontales 21 pointent dans une direction sensiblement horizontale. Pour cela, le pivot 4 comporte un bloc 44 avec alésage dans lequel est agencé un axe de pivot 43 orienté conformément à l'axe de rotation souhaité. Sur l'axe de pivot 43 est monté un support 45 avec un dispositif de couplage 41, 42 auquel peut être fixé le boîtier 1. Par exemple, le dispositif de couplage 41, 42 peut consister en deux rails 41, 42 entre lesquels peut être insérée une forme correspondante d'une face inférieure 16 du boîtier 1. Comme le montre la figure 4, pour une meilleure robustesse du pivot 4, le support 45 peut être réalisé en deux parties disposées de part et d'autre du bloc 44 sur l'axe de pivot 43. Afin de limiter la transmission de chocs et de vibrations entre le véhicule sur lequel est fixé le pivot 4 et le boîtier 1 monté sur le pivot 4, des paliers à collerette 46 en caoutchouc peuvent optionnellement être enfilés dans l'alésage du bloc 44 et autour de l'axe de pivot 43. Afin de limiter l'amplitude de rotation de l'axe de pivot 43 et d'éviter que le boîtier 1 puisse entrer en collision avec le système de fixation 5 ou le véhicule sur lequel il est fixé, l'axe de pivot 43 peut être muni d'un doigt 47 qui se déplace à l'intérieur d'une ouverture du bloc 44 de largeur définie. La rotation de l'axe de pivot 43 est limitée par l'entrée en butée du doigt 49 contre une paroi de l'ouverture du bloc 44.

Le système de fixation est composé d'une plaque 50 sur laquelle le boîtier 1 peut être fixé par l'intermédiaire du pivot 4. Cette plaque 50 comporte au moins trois, préférablement quatre voire cinq pieds 51 aptes à fixer la plaque 50 à un véhicule, par exemple sur son toit ou sur son capot. Chaque pied 51 comporte un socle 511 muni d'une ventouse 512 ou d'un aimant 512 et est lié à la plaque 50 par une liaison pivot. Cette liaison pivot peut par exemple être réalisée par la combinaison d'une pince 52 fixée à la plaque 50 et d'un arbre de verrouillage 53 pour bloquer la rotation des pieds 51. Chaque pied est réglable séparément en hauteur et en inclinaison afin de s'adapter à toute surface de fixation, même courbe ou inclinée.

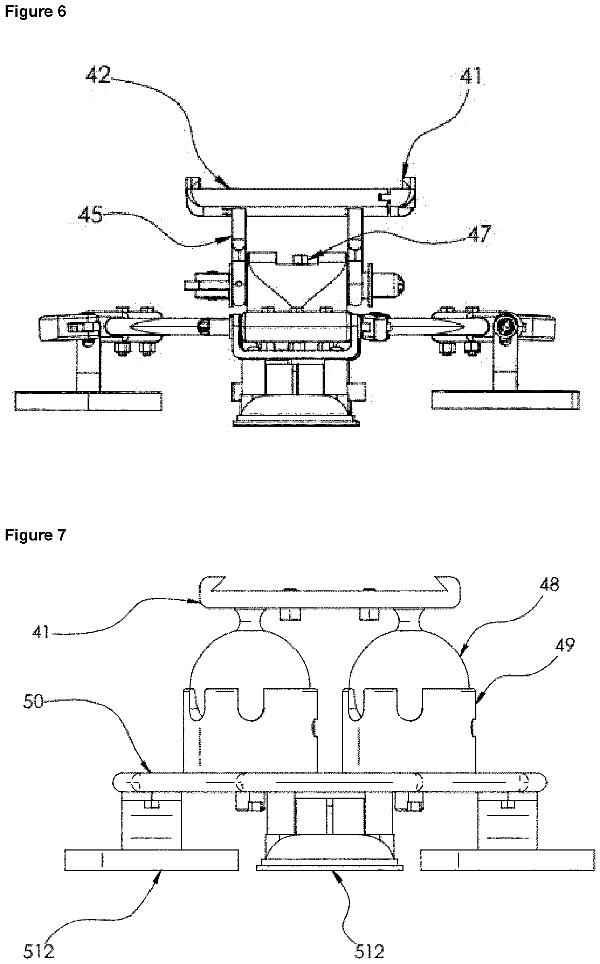

Un mode de réalisation alternatif 4 du pivot est représenté figure 7. Selon ce mode de réalisation, le pivot 4 comporte un dispositif de couplage 41, 42 pour le boîtier 1 monté sur deux rotules sphériques 48 insérées chacune dans une monture 49 fixée à la plaque 50 du système de fixation 5. Les rotules 48 pivotent dans leurs montures 49, ce qui permet d'ajuster l'inclinaison du boîtier 1 pour diriger le champ de vision 25 des caméras.

Selon un mode de réalisation avantageux de l'invention, le boîtier 1 comprend une plaque d'interface utilisateur 15 comportant un bouton d'allumage/extinction La plaque d'interface utilisateur 15 peut par exemple être disposée sur une face inférieure 16 du boîtier 1.

Selon un mode de réalisation avantageux de l'invention, l'outil est alimenté par une batterie logée dans le boîtier 1. Préférablement, le boîtier 1 comporte sur sa surface supérieure 14 un ou plusieurs panneaux solaires 17 afin de recharger la batterie et prolonger l'autonomie énergétique de l'outil.

Selon un mode de réalisation avantageux de l'invention, le boîtier 1 comprend un ou plusieurs dissipateurs thermiques 18 afin d'évacuer la chaleur produite par l'électronique embarquée.

Selon un mode de réalisation avantageux de l'invention, le boîtier 1 comprend un ou plusieurs capteurs 6 adaptés pour mesurer des données météorologiques telles que la température, l'humidité, la luminosité et/ou la pression atmosphérique, ces données pouvant être envoyées à l'utilisateur. Il est particulièrement avantageux de fournir des données météorologiques à l'algorithme d'analyse d'images, qui en tient compte pour l'attribution d'une anomalie détectée sur un feuillage ou un fruit à une certaine maladie ou à un certain événement météorologique avec un indice de confiance plus élevé ou plus faible. Par exemple, une reconnaissance visuelle par l'algorithme d'analyse d'image de dégâts a priori causés par le gel peut être confortée ou invalidée si les données météorologiques confirment qu'il y a bien eu une période de gel ou non. Un autre exemple est l'attribution d"anomalies du feuillage au mildiou, qui sera confortée si les données météorologiques confirment qu'il y a bien eu une période humide ou non. Les données météorologiques fournies à l'algorithme d'analyse d'image peuvent être des données météorologiques externes ou des données météorologiques enregistrées par le boîtier lui-même grâce à ses propres capteurs, qu'il s'agisse de données mesurées à l'instant t ou d'un historique de données enregistrées sur une certaine période passée.

Selon un mode de réalisation avantageux de l'invention, le système de transmission de données comporte une antenne et permet la communication de données sans fil par ondes électromagnétiques selon un protocole usuel de type WiFi, Bluetooth, 3G, 4G ou 5G ou autre. Le système de transmission de données peut être équipé d'une carte SIM pour communiquer des données via le réseau mobile. Dans un autre mode de réalisation, le système de transmission de données peut consister en un ou plusieurs ports de connexion pour des câbles de transmission de données (par exemple de type USB etc.) et/ou un ou plusieurs ports pour le branchement d'une antenne extérieure.

Selon un mode de réalisation avantageux de l'invention, un ou plusieurs composants de l'outil, plus particulièrement le boîtier 1 et/ou la plaque 50 du système de fixation 5, présentent une forme aérodynamique de manière à créer, lorsque l'outil est mu sensiblement dans la direction dans laquelle pointent les caméras frontales 21, une force plaquant le boîtier 1 contre le système de fixation 5 et/ou le système de fixation 5 contre le véhicule terrestre V sur lequel il est fixé. Cette force, opposée à celle que crée une aile pour le décollage d'un avion mais créée selon les mêmes principes aérodynamiques, stabilise l'outil lors de déplacements à grande vitesse et assure son bon maintien au véhicule terrestre V.

Selon un mode de réalisation avantageux de l'invention, le le boîtier 1 peut être disposé sur le devant du véhicule terrestre V ou sur sa toiture en fonction de l'usage recherché.

Selon différents modes de réalisation de l'invention, les données de géolocalisation acquises par le récepteur GNSS 3 et les données visuelles acquises par le système de vision 2 peuvent être entièrement ou partiellement traitées par le processeur 7 avant d'être transmises via le système de transmission de données. La transmission des données peut se réaliser de manière immédiate ou différée, auquel cas le boîtier 1 renferme une mémoire capable de stocker les données.

L'outil de géolocalisation peut comporter, outre le boîtier 1, un serveur 8 et une base de données distants (cloud) ainsi qu'une une application connectée au serveur à installer sur un terminal électronique mobile, en particulier sur une tablette ou un smartphone. Les informations visuelles et de géolocalisation collectées par le boîtier 1 sont envoyées au serveur distant 8 afin d'être traitées par une intelligence artificielle entraînée à reconnaître des cibles définies se trouvant dans les images fournies par le système de vision 2 par apprentissage automatique (machine learning). L'application mobile peut être liée à un logiciel de décision et de management prodiguant des conseils sur la gestion de l'exploitation agricole à partir d'une analyse des données connectées. Le terminal électronique mobile permet non seulement de visualiser les données collectées, en particulier sur une carte, et d'éventuels conseils émanant d'un logiciel de décision et de management, mais aussi d'entrer des informations dans le système. Par exemple, des employés présents physiquement dans une parcelle et constatant une anomalie pourraient la signaler via l'application installée sur leur terminal électronique mobile, qui y adjoint une information de géolocalisation obtenue par des instruments présents de manière standard dans la plupart des terminaux électroniques mobiles modernes.

## Revendications

1. Procédé de suivi de cultures agricoles (C) au moyen d'un outil de géolocalisation, l'outil de géolocalisation comprenant un boîtier (1) avec un système de vision (2), un récepteur GNSS (3), un système de transmission de données et un processeur (7), le système de vision (2) comprenant au moins une première caméra (21) disposée sur une face avant (11) du boîtier (1),
**caractérisé en ce que** :
a) le boîtier (1) est déplacé par un véhicule terrestre (V) sur une surface de culture agricole ;
b) le système de vision (2) acquiert au moins une image des cultures agricoles (C) ;
c) au moins une cible prédéfinie est reconnue dans l'image des cultures agricoles (C) par un algorithme d'analyse d'image ;
d) les coordonnées de géolocalisation de la cible sont calculées à partir des coordonnées de géolocalisation du boîtier (1) et de la position relative de la cible par rapport au boîtier (1), les coordonnées de géolocalisation du boîtier (1) étant calculées à partir de signaux GNSS acquis par le récepteur GNSS (3) et la position relative de la cible par rapport au boîtier (1) étant déterminée à partir de données visuelles issues du système de vision (2) ;
e) une entrée est créée dans une base de données, associant la nature de la cible reconnue avec les coordonnées de géolocalisation de la cible.

2. Procédé selon la revendication 1,
**caractérisé en ce que**
• au cours de l'étape c), un indice de confiance de la reconnaissance est calculé ;
• l'entrée dans la base de données selon l'étape e) comprend aussi cet indice de confiance ; et
• si une deuxième cible est reconnue de même nature qu'une première cible figurant déjà dans la base de données et que la géolocalisation de la deuxième cible diffère de la géolocalisation de la première cible de moins d'un certain seuil de distance, alors la première et la deuxième cible sont reconnues comme étant une seule et même cible, et cette cible se voit attribuer un indice de confiance supérieur aux indices de confiance individuels initialement attribués à chacune des deux cibles séparément.

3. Procédé selon la revendication 2,
**caractérisé en ce que** :
• une entrée est créée dans la base de données pour une cible avec un premier indice de confiance ;
• suite à une ou plusieurs reconnaissances ultérieures de cette même cible, cette cible se voit attribuer un deuxième indice de confiance supérieur au premier indice de confiance ;
• un seuil de confiance supérieur au premier indice de confiance et inférieur ou égal au deuxième indice de confiance est défini ; et
• dans une étape ultérieure à l'étape e), les cibles entrées dans la base de données dont l'indice de confiance est inférieur au seuil de confiance sont ignorées.

4. Procédé selon l'une des revendication précédentes,
**caractérisé en ce que**
une cible prédéfinie est de nature suivante : un fruit ou un épi ou une grappe de raisin ou un feuillage décoloré ou un feuillage asséché ou un fruit asséché ou un fruit pourri ou un plant manquant ou un plant mort ou un ravage causé aux cultures agricoles (C) par des nuisibles ou un dégât météorologique causé aux cultures agricoles (C).

5. Procédé selon l'une des revendication précédentes,
**caractérisé en ce que**
l'algorithme d'analyse d'image, en plus reconnaître la nature d'une cible, en mesure au moins une caractéristique qui est entrée dans la base de données, cette caractéristique étant la taille ou le volume d'un fruit ou d'une grappe de raisins ou le nombre de grains de raisins d'une grappe de raisins ainsi que leur diamètre ou la couleur d'un fruit ou d'une grappe de raisin ou d'un grain de raisin ou d'un feuillage ou le nom d'une maladie correspondant à une anomalie d'un feuillage ou d'un fruit ou d'une grappe de raisins ou d'un grain de raisin.

6. Procédé selon la revendication 5,
**caractérisé en ce que**
une carte géographique de la surface agricole est générée, sur laquelle une ou plusieurs cibles reconnues sont représentées à leur coordonnées de géolocalisation respectives ; et
lorsque le véhicule terrestre (V) accompagné du boîtier (1) effectue deux passages espacés dans le temps sur la même surface de culture agricole, au moins une caractéristique des cibles mesurée lors du second passage est comparée informatiquement avec cette même caractéristique des cibles mesurée lors du premier passage et une carte géographique de la surface agricole est générée, sur laquelle le changement constaté entre les deux jeux de caractéristiques est représenté aux coordonnées de géolocalisation des cibles suivant un processus de cartographie différentielle.

7. Procédé selon l'une des revendication précédentes,
**caractérisé en ce que**
l'outil de géolocalisation comprend un serveur distant (8) auquel est transmise l'image des cultures agricoles (C) acquise au cours de l'étape b), et c'est ce serveur distant (8) qui effectue l'analyse d'images selon l'étape c) et qui tient la base de données selon l'étape e).

8. Procédé selon l'une des revendication précédentes,
**caractérisé en ce que**
le système de vision (2) comprend une deuxième caméra (21) disposée sur la face avant (11) du boîtier (1),
la première et la deuxième caméra (21) procurent chacune des images bidimensionnelles qui sont agrégées par le processeur (7) afin d'obtenir des images tridimensionnelles par stéréoscopie
et ces images tridimensionnelles sont utilisées par l'algorithme d'analyse d'image pour une meilleure reconnaissance de cibles et/ou pour une meilleure extraction de l'information de la cible et/ou pour le calcul de la position relative de la cible par rapport au boîtier (1).

9. Procédé selon l'une des revendication précédentes,
**caractérisé en ce que**
l'outil de géolocalisation comprend une caméra supérieure (24) disposée sur une face supérieure (14) du boîtier (1) et pour l'acquisition des coordonnées de géolocalisation du boîtier (1), sur la base des données visuelles collectées par la caméra supérieure (24), le ciel est classé en deux régions :
- une première région du ciel sur laquelle le récepteur GNSS (3) a une vue directe et dégagée ; et
- une seconde région du ciel obstruée à la vue directe du récepteur GNSS (3) et pour chaque signal d'un satellite GNSS (S) reçu par le récepteur GNSS (3), le processeur (7) détermine s'il émane d'un satellite (S) se trouvant dans la première région du ciel, auquel cas le signal peut être pris en compte dans le calcul de géolocalisation de la cible, ou si le signal émane d'un satellite (S) se trouvant dans la seconde région du ciel, auquel cas le signal est exclu du calcul de géolocalisation de la cible.

10. Outil de géolocalisation conçu pour mettre en oeuvre le procédé de suivi de cultures agricoles (C) selon la revendication 1,
l'outil de géolocalisation comprenant un boîtier (1) avec un système de vision (2), un récepteur GNSS (3), un système de transmission de données et un processeur 7, le système de vision (2) comprenant au moins cinq caméras, dont deux caméras frontales (21) disposées sur une face avant (11) du boîtier (1), deux caméras latérales (22) disposées chacune sur une face latérale (12, 13) du boîtier (1) et une caméra supérieure (24) disposée sur une face supérieure (14) du boîtier (1).

11. Outil selon la revendication 10,
**caractérisé par**
un dispositif de sauvegarde permettant de stocker les sous-images ainsi que les coordonnées de géolocalisation associées.

12. Outil selon la revendication 10,
**caractérisé en ce que**
le système de vision (2) comporte une caméra arrière (23) disposée sur une face arrière (19) du boîtier (1).

13. Outil selon la revendication 10,
**caractérisé en ce que**
le boîtier (1) comprend un ou plusieurs capteurs adaptés pour mesurer la température, l'humidité, la luminosité et/ou la pression atmosphérique

14. Outil selon la revendication 10,
**caractérisé en ce que**
le système de vision (2) comporte au moins deux caméras supérieures (24) disposées sur une face supérieure (14) du boîtier (1).

15. Outil selon la revendication 10,
**caractérisé par**
un système de fixation (5) pour la fixation du boîtier (1) sur un véhicule et par
un pivot (4) disposé entre le boîtier (1) et le système de fixation (5) pour ajuster l'inclinaison du boîtier (1) par rotation autour d'un axe sensiblement orthogonal au plan médiateur des deux caméras frontales (21),
le système de fixation (5) étant composé d'une plaque (50) comportant au moins trois pieds (51), chaque pied (51) étant lié à la plaque (50) par une liaison pivot et comportant un socle (511) muni d'une ventouse (512) ou d'un aimant (512),
le pivot (4) comportant un bloc (44) avec alésage dans lequel est agencé un axe de pivot (43), un support (45) avec un dispositif de couplage (41, 42) pour le boîtier (1) étant monté sur l'axe de pivot (43), et des paliers à collerette (46) en caoutchouc étant enfilés dans l'alésage du bloc (44) et autour de l'axe de pivot (43).
